(19) **Europäisches Patentamt / European Patent Office / Office européen des brevets**

(11) **EP 2 469 276 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(51) Int Cl.:
**G01N 29/11** *(2006.01)* **G01N 29/06** *(2006.01)*
**G01N 29/44** *(2006.01)*

(21) Anmeldenummer: **12001837.9**

(22) Anmeldetag: **04.04.2008**

(54) **Verfahren und Vorrichtung zur zerstörungsfreien Materialprüfung eines Prüfgegenstands mit Ultraschallwellen**

Method and device for non-destructive materials testing of a test specimen with ultrasonic waves

Dispositif et procédé destinés à la vérification sans destruction d'un objet à l'aide d'ondes ultrasonores

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.05.2007 DE 102007022981**

(43) Veröffentlichungstag der Anmeldung:
**27.06.2012 Patentblatt 2012/26**

(62) Dokumentnummer(n) der früheren Anmeldung(en) nach Art. 76 EPÜ:
**08735834.7 / 2 147 300**

(73) Patentinhaber:
- **Siemens Aktiengesellschaft**
  **80333 München (DE)**
- **Bundesanstalt Für Materialforschung Und -Prüfung (BAM)**
  **12205 Berlin (DE)**

(72) Erfinder:
- **Boehm, Rainer**
  **15848 Rietz-Neuendorf (DE)**
- **Goldammer, Matthias**
  **80687 München (DE)**
- **Heinrich, Werner**
  **16727 Oberkrämer OT Bärenklau (DE)**

(56) Entgegenhaltungen:
- SPIES M ET AL: "Synthetic aperture focusing for defect reconstruction in anisotropic media", ULTRASONICS, IPC SCIENCE AND TECHNOLOGY PRESS LTD. GUILDFORD, GB, Bd. 41, Nr. 2, 1. März 2003 (2003-03-01), Seiten 125-131, XP004404920, ISSN: 0041-624X
- AHMED YAMANI: "Three-Dimensional Imaging Using a New Synthetic Aperture Focusing Technique", IEEE TRANSACTIONS ON ULTRASONICS, FERROELECTRICS ANDFREQUENCY CONTROL, IEEE SERVICE CENTER, PISCATAWAY, NJ, US, Bd. 44, Nr. 4, 1. Juli 1997 (1997-07-01), Seiten 943-947, XP011090011, ISSN: 0885-3010
- DEUTSCH V ET AL: "3.4.3.6 Rechnergestützte Fehlerbeschreibung", ULTRASCHALLPRUEFUNG: GRUNDLAGEN UND INDUSTRIELLE ANWENDUNGEN, XX, XX, 1. Januar 1997 (1997-01-01), Seiten 133-141, XP002278716,
- BAZULIN E G: "Utilization of double scanning in ultrasonic testing to improve the quality of the scatterer images", ACOUSTICAL PHYSICS, NAUKA/INTERPERIODICA, MO, Bd. 47, Nr. 6, 1. November 2001 (2001-11-01), Seiten 649-653, XP019303485, ISSN: 1562-6865

## Beschreibung

Die Erfindung betrifft ein Verfahren zur zerstörungsfreien Materialprüfung gemäß dem Oberbegriff des Patentanspruches 1. Weiterhin betrifft die Erfindung eine entsprechende Vorrichtung gemäß dem Patentanspruch 16.

Bei zahlreichen massiven und teilweise massiven Produkten und auch Zwischenprodukten muss deren innere Struktur nach Materialfehlern untersucht werden. Dazu sind zerstörungsfreie Prüfverfahren erforderlich, die Informationen über die innere, nicht-einsehbare Struktur bereitstellen. Dies ist insbesondere bei mechanisch stark beanspruchten Bauteilen notwendig.

Beispielsweise werden Bauteile aus Stahl nach dem Gießen geschmiedet, um anschließend durch Drehen in die endgültige Form gebracht zu werden. Dabei kann die Prüfung auf innere Materialfehler bereits nach dem Schmieden erfolgen.

Üblicherweise werden solche Metallteile mit Ultraschall geprüft. Dabei werden die Schallwellen erfasst, die an Grenzflächen im Material reflektiert werden. Mit der Laufzeit der reflektierten Schallwelle kann deren zurückgelegte Weglänge bestimmt werden. Durch eine Einschallung aus verschiedenen Richtungen lassen sich weitere Informationen über den oder die Materialfehler gewinnen. Daraus lassen sich beispielsweise Materialfehler orten. Beispielsweise kann die geometrische Ausrichtung des Materialfehlers auf diese Weise bestimmt werden. Aus der Form der reflektierten Schallwellen lassen Rückschlüsse auf die Art des Materialfehlers ziehen.

Durch ein Abtasten der Oberfläche des Prüfgegenstands mit einem Ultraschalldetektor und ein Aufzeichnen der erfassten Daten kann das dem Ultraschall zugängliche Volumen vollständig untersucht werden. Aus den erfassten Daten lässt sich eine Abbildung generieren, die zur Begutachtung verwendet werden kann.

Zur Bestimmung der Größe der Materialfehler gibt es mehrere Möglichkeiten. Beispielsweise kann beim Abtasten die Ausdehnung des Materialfehlers direkt abgelesen werden. Dazu ist jedoch erforderlich, dass die Ortsauflösung kleiner als die räumliche Ausdehnung des Materialfehlers ist. Die Ortsauflösung ist durch die verwendete Wellenlänge und die Größe der Apertur und damit durch die Beugung der Schallwellen begrenzt.

Die Größe des Materialfehlers kann auch mit der Amplitude des reflektierten Signals bestimmt werden. Damit lässt sich auch die Größe solcher Materialfehler bestimmen, die kleiner als die Ortsauflösung des Verfahrens sind. Die Amplitude des reflektierten Signals hängt jedoch auch von weiteren Parametern ab, beispielsweise von der Orientierung des Materialfehlers oder den Reflexionseigenschaften an der Grenzfläche.

Bei abnehmender Größe des Materialfehlers nimmt die Amplitude des reflektierten Signals ab. Dabei wird der Abstand zu den Störsignalen zu gering, um aus einem einzigen Amplituden-Laufzeit-Diagramm den Materialfehler zu identifizieren. Zweckmäßigerweise ist ein Abstand von +6 dB zwischen dem Messsignal und dem Störsignal erforderlich.

Die Ortsauflösung lässt sich durch eine Fokussierung der Schallwellen mit Hilfe geeigneter Prüfköpfe optimieren. Dabei kann die Fokussierung umso schmäler werden, je breiter der Prüfkopf im Verhältnis zur Wellenlänge ist. Die Fokussierung bewirkt einen höheren Schalldruck.

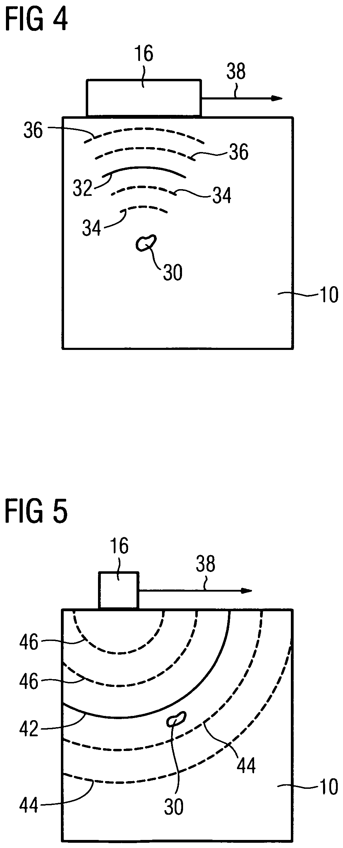

FIG 4 zeigt eine schematische Schnittansicht eines Prüfgegenstands 10 mit einem Materialfehler 30. An der Außenseite des Prüfgegenstands 10 befindet sich ein Prüfkopf 16, der als fokussierender Prüfkopf ausgebildet ist. Von dem Prüfkopf 16 werden fokussierte Schallwellen 32, 34 und 36 abgestrahlt.

Dabei stellt die durchgezogene Linie die Wellenfront der aktuellen Schallwelle 32 dar. Die gestrichelten Linien stellen die Wellenfronten der früheren Schallwellen 34 und der späteren Schallwellen 36 dar. Die fokussierten Schallwellen 32, 34 und 36 breiten sich entlang einer vorbestimmten Richtung mit seitlich begrenzter Ausdehnung aus.

Der Prüfkopf 16 bewegt sich während des Abtastens auf der Oberfläche des Prüfgegenstands 10 entlang einer Abtastrichtung 38. Die Fokussierung tritt jedoch nur innerhalb des Nahfelds des Prüfkopfs 16 auf. Je größer die Breite des Prüfkopfs 16 senkrecht zur Abstrahlrichtung ist, desto größer kann die Entfernung des erfassbaren Materialfehlers 30 sein.

Eine Möglichkeit zur Bewertung der Materialfehler ist die Auswertung der Amplitude nach dem Abstand-Verstärkung-Größe-Verfahren (AVG-Verfahren). Ausgehend von der Amplitude wird dem Materialfehler eine Ersatzreflektorgröße zugeordnet, die eine senkrecht beschallte freie kreisrunde Oberfläche erzeugen würde. Wenn das erfasste Signal deutlich größer ist als das Störsignal oder Rauschsignal, ist die Auswertung der Amplitude nach der AVG-Methode problemlos möglich. Dabei muss sich der Reflektor auf der akustischen Achse des Schallfeldes des Prüfkopfes 16 befinden. Aus der Abhängigkeit der Amplitude vom Abstand zum Prüfkopf 16 entspricht die erfasste Amplitude einer Reflektorgröße mit bekannter Geometrie und Orientierung zur akustischen Achse. Ist dagegen die erfasste Amplitude kleiner als das Rauschsignal oder in einer vergleichbaren Größenordnung, kann der Materialfehler aus dem Amplituden-Laufzeit-Diagramm nicht identifiziert werden.

Eine andere Methode zur Verbesserung der Ortsauflösung ist die "Synthetische Apertur-Fokus-Technik" (SAFT), bei der ein kleiner nicht fokussierender Prüfkopf verwendet wird. Dabei wird mit einer zweidimensionalen mechanischen Abtastung des Prüfgegenstands eine dreidimensionale Abbildung des Prüfgegenstands berechnet.

In FIG 5 ist zur Erläuterung des SAFT-Verfahrens eine schematische Schnittansicht eines Prüfgegenstands 10 mit einem Materialfehler 30 dargestellt. An der Außenseite des Prüfgegenstands 10 befindet sich der Prüfkopf 16. Der Prüfkopf hat im Vergleich zu FIG 4 einen relativ kleinen Durchmesser und ist nicht fokussierend ausgebildet. Von dem Prüfkopf 16 werden kugelschalenförmige Schallwellen 42, 44 und 46 abgestrahlt. Die Wellenfront der aktuellen kugelschalenförmigen Schallwelle 42 ist durch eine durchgezogene Linie dargestellt. Die gestrichelten Linien stellen die Wellenfronten der früheren kugelschalenförmigen Schallwellen 44 sowie der späteren kugelschalenförmigen Schallwellen 46 dar. Ein Vergleich von FIG 4 und FIG 5 verdeutlicht, dass die Wellenfronten 32, 34 und 36 der fokussierten Schallwellen einerseits und die Wellenfronten 42, 44 und 46 der kugelschalenförmigen Schallwellen andererseits entgegengesetzt gekrümmt sind.

Der Prüfgegenstand 10 wird beim SAFT-Verfahren von einem Rechner in Volumenelemente unterteilt. Jedes Volumenelement wird während der Abtastung nacheinander als Reflektor betrachtet. Die reflektierten Signalanteile von verschiedenen Positionen des Prüfkopfs 16, die zu demselben Volumenelement gehören, werden aufgezeichnet und mit Unterstützung des Rechners phasenrichtig aufaddiert. Auf diese Weise werden nur für solche Orte mit tatsächlicher Reflexion aufgrund der konstruktiven Interferenz Echosignale mit großer Amplitude erhalten. Für Orte ohne tatsächliche Reflexion werden aufgrund der destruktiven Interferenz die Echosignale ausgelöscht. Der Abtast- und Rechenvorgang simuliert bei konstruktiver Interferenz einen Ultraschalldetektor, dessen Größe der abgetasteten Fläche entspricht und der auf einen Ort fokussiert ist.

Daraus lässt sich die Position des Materialfehlers und bei einem ausgedehnten Materialfehler auch dessen Größe im Rahmen der Auflösung bestimmen. Die Genauigkeit ist etwa vergleichbar mit der in dem abgetasteten Bereich bei dem vorgenannten Verfahren, das die fokussierten Schallwellen verwendet. Bei dem SAFT-Verfahren ist die Ortsauflösung nicht durch die Abmessungen des Prüfkopfs 16 begrenzt, so dass eine hohe Ortsauflösung möglich ist.

Beim SAFT-Verfahren werden in jedem Bildpunkt im Fehlererwartungsbereich alle in Frage kommenden reflektierten Signalanteile mit einer Zeitverschiebung addiert, die die Signalanteile dann hätten, wenn der Bildpunkt die Quelle einer reflektierten Welle wäre. Die Zeitverschiebung, die der Phasenlage entspricht, ergibt sich aus den geometrischen Beziehungen zwischen dem Prüfkopf 16 und dem Bildpunkt, insbesondere aus dem Abstand zwischen dem Prüfkopf 16 und dem Bildpunkt. Wenn der Bildpunkt nun tatsächlich die Quelle einer reflektierten Welle ist, dann nimmt die Amplitude an dieser Stelle mit der Anzahl der verschiedenen Positionen des Prüfkopfs 16 zu, von denen aus der Materialfehler erfasst wurde. Für alle anderen Bildpunkte stimmen die Phasen nicht überein, so dass die Summe im Idealfall gegen Null geht, zumindest aber sehr klein ist.

Das SAFT-Verfahren wird meist verwendet, um eine hohe Ortsauflösung zu erreichen. Es handelt sich im Prinzip um ein Fokussierungsverfahren, bei dem sich die Auflösungsgrenze durch die Wellenlänge und die synthetische Apertur ergibt. Die synthetische Apertur wird von dem Winkelbereich bestimmt, aus dem der Materialfehler erfasst wird. Die Apertur wird durch die Bewegung des Prüfkopfes 16 und die Divergenz des Schallfeldes begrenzt.

Der Prüfgegenstand kann beispielsweise ein Rotor einer Gas- oder Dampfturbine sein, der insbesondere für die Stromerzeugung verwendet wird. Ein solcher Rotor wird im Betrieb einer hohen Beanspruchung ausgesetzt. Die Drehzahl des Rotors entspricht der Netzfrequenz des jeweiligen Stromnetzes. Beispielsweise ist bei einem Stromnetz mit einer Netzfrequenz von 50 Hz eine Drehzahl von 3000 Umdrehungen pro Minute erforderlich. Bei derart hohen Drehzahlen treten große Fliehkräfte am Rotor auf. Die Fliehkräfte nehmen mit dem Durchmes- des Rotors zu. Je größer die Turbine ausgelegt ist, desto stärker sind auch die Fliehkräfte.

Beim Start der Turbine werden die Rotoren insbesondere thermisch in tangentialer Richtung stark belastet. In dieser Phase ist der Rotor zunächst kalt und wird durch die heißen Verbrennungsgase von Außen nach Innen auf Betriebstemperatur gebracht. Daher hat für die Lebensdauer der Turbine die Anzahl der Starts eine besondere Bedeutung. Die tangentiale Belastung ist für den Rotor im Bereich seiner zentralen Bohrung am größten. Daher haben Materialfehler in der Nähe der Bohrung einen entscheidenden Einfluss auf die Langlebigkeit der Turbinen. Insbesondere bei der kommenden Generation von Turbinenradscheiben ist eine deutliche Erhöhung der Nachweisempfindlichkeit für axial-radial orientierte Materialfehler erforderlich. Eine hinreichend genaue Bestimmung der axial-radial orientierten Materialfehler ist mit den bisherigen Prüfverfahren nicht möglich.

Aufgrund der höheren Leistungen der neueren Gas- oder Dampfturbinen steigen die Anforderungen, dass der Rotor frei von Materialfehlern ist. Auch die Größe der Rotoren nimmt zu, was bei der Materialprüfung längere Ultraschallwege zur Folge hat. Durch die größere Weglänge des Ultraschalls nimmt im inneren Bereich des Rotors die Mindestgröße der erfassbaren Materialfehler zu. Es besteht somit ein Bedarf an einem Verfahren, das auch eine Materialfehlerbestimmung bei großen Bauteilen ermöglicht.

Martin Spies und Winfried Jager "Synthetic aperture focusing for defect reconstruction in anisotropic media", Ultrasonics 41 (2003), Seiten 125 bis 131) beschreiben ein SAFT-Verfahren (Synthetic aperture focusing technic) für anisotrope Medien. In derartigen Medien hängt die Gruppengeschwindigkeit des Ultraschallsignals von der Ausbreitungsrichtung ab. Als Folge davon erfolgt eine Schrägstellung des Signals gegenüber der eigentlichen Einschallrichtung.

Bazulin E.G. "Utilization of Double Scanning in Ultrasonic Testing to Improve the Quality of the Scatterer Images", Acoustical Physics, Volume 47, No. 6, 2001, Seiten 649-653 beschreibt ein Ultraschalltestverfahren in dem Sender und Empfänger unabhängig voneinander entlang einer parallelen Linie bewegt werden. Als einen Vorteil dieser Methode wird angesehen, dass kein Einschallen ebener Wellen nötig ist. Die Transformation der Messung in eine spektrale Repräsentation (spectral space) wird dabei auf dieselbe Weise erreicht, als wenn ein Schema mit einer feststehenden Detektionslinie des gestreuten Feldes und dem Einschallen ebener Wellen unter verschiedenen Winkeln Verwendung fände.

Es ist Aufgabe der Erfindung, ein verbessertes Verfahren zum Auffinden und/oder Identifizieren von Materialfehlern in einem Prüfgegenstand bereit zu stellen, das auch bei relativ großen Prüfgegenständen eine Materialfehlerbestimmung mit hinreichender Genauigkeit ermöglicht.

Diese Aufgabe wird durch den Gegenstand gemäß Patentanspruch 1 gelöst.

Gemäß der Erfindung ist vorgesehen, dass eine winkelabhängige Amplitudenverteilung im Schallfeld des Prüfkopfes verwendet wird.

Der Kern der Erfindung liegt in einem modifizierten SAFT-Verfahren, bei dem die winkelabhängige Amplitudenverteilung im Schallfeld des Prüfkopfes berücksichtigt wird. Auf diese Weise lassen sich unterschiedliche Empfindlichkeiten, die vom Winkel abhängen, berücksichtigen. Die Amplituden der einzelnen reflektierten Signale sind abhängig von der Amplitudenverteilung im Schallfeld des Prüfkopfes. Es wird die räumliche Schalldruckverteilung des Prüfkopfes genutzt, um auch die Amplituden der reflektierten Schallwellen zu bestimmen. Beim herkömmlichen SAFT-Verfahren geht die Information über die Amplitude verloren.

Beispielsweise wird aus der winkelabhängigen Amplitudenverteilung ein Korrekturfaktor bestimmt, der der mittleren Empfindlichkeit entlang des Weges durch das Schallfeld des Prüfkopfes entspricht. Der Korrekturfaktor wird durch Integration über die Amplitudenverteilung des Prüfkopfes bestimmt.

Vorzugsweise werden die Amplituden der Schallwellen innerhalb eines vorbestimmten Winkelintervalls um die akustische Achse phasenrichtig aufaddiert. Dabei kann auch ein Prüfkopf mit einer kleinen Schalbündeldivergenz, z.B. 3° bis 5° bei -6 dB, verwendet werden.

Weiterhin kann das Beaufschlagen des Prüfgegenstands mit Ultraschall unter verschiedenen Einschallwinkeln bezüglich des Flächenelements an der Oberfläche des Prüfgegenstands erfolgen. Da Materialfehler oftmals eine bevorzugte Ausdehnungsrichtung haben, können gemäß der Erfindung das Abtasten der Oberfläche des Prüfgegenstands und die Variation der Einschallwinkel an die Geometrie des Prüfgegenstands und die Ausrichtung der Materialfehler angepasst werden.

Beispielsweise liegen die Einschallwinkel innerhalb eines Kegels, dessen Symmetrieachse die Normale des jeweiligen Flächenelements bildet.

Bei einer speziellen Ausführungsform kann vorgesehen sein, dass die Oberfläche oder zumindest der Oberflächenabschnitt des Prüfgegenstands entlang einer vorbestimmten Linie abgetastet wird. Durch die verschiedenen Einschallwinkel kann das Volumen des Prüfgegenstands vollständig erfasst werden, ohne die gesamte Oberfläche abzutasten.

Vorzugsweise wird die Oberfläche oder zumindest der Oberflächenabschnitt des Prüfgegenstands gerastert nach einem vorbestimmten Schema abgetastet. Dieses Schema kann an die Geometrie des Prüfgegenstands und/oder des Materialfehlers angepasst werden.

Weiterhin kann auch die Oberfläche oder zumindest der Oberflächenabschnitt des Prüfgegenstands vollständig abgetastet werden.

Beispielsweise betragen die Einschallwinkel zwischen 0° und 50°, vorzugsweise zwischen 0° und 30°.

Insbesondere kann das Verfahren für einen zumindest abschnittsweise rotationssymmetrischen Prüfgegenstand vorgesehen sein. Dabei lässt sich das Abtasten besonders einfach an die Geometrie des Prüfgegenstands anpassen. Dies trifft insbesondere dann zu, wenn das Verfahren für einen zumindest abschnittsweise zylindrischen Prüfgegenstand vorgesehen ist.

Dabei weist die Einschallrichtung vorzugsweise eine radiale, tangentiale und/oder axiale Komponente bezüglich der Oberfläche des zylindrischen Prüfgegenstands auf. Damit können auch besonders flach ausgebildete Materialfehler erkannt werden.

Bei der bevorzugten Ausführungsform ist das Verfahren für die Materialprüfung eines Prüfgegenstands aus Metall vorgesehen, insbesondere für die Materialprüfung eines geschmiedeten Bauteils. Besonders geeignet ist das Verfahren für die Materialprüfung eines Turbinenrades.

Weiterhin betrifft die Erfindung eine Vorrichtung zur zerstörungsfreien Materialprüfung eines zumindest abschnittsweise massiven Prüfgegenstands, die für das oben beschriebene Verfahren vorgesehen ist.

Vorzugsweise umfasst die Vorrichtung wenigstens einen Prüfkopf zum Aussenden von Ultraschallwellen und zum Erfassen der innerhalb des Prüfgegenstands reflektierten Ultraschallwellen.

Insbesondere ist der Prüfkopf schwenkbar, so dass die Einschallrichtung bezüglich der Flächennormalen der Oberfläche des Prüfgegenstands variierbar ist.

Schließlich ist der Prüfkopf bezüglich der Flächennormalen der Oberfläche des Prüfgegenstands zwischen 0° und 60°, vorzugsweise zwischen 0° und 30° schwenkbar.

Weitere Merkmale, Vorteile und besondere Ausführungsformen der Erfindung sind Gegenstand der Unteransprüche.

Nachstehend wird das Verfahren gemäß der Erfindung in der Figurenbeschreibung anhand bevorzugter Ausführungsformen und unter Bezugnahme auf die beigefügten Zeichnungen näher erläutert. Es zeigen:

FIG 1    eine schematische seitliche Schnittansicht eines Prüfgegenstands und eines Prüfkopfes gemäß einer bevorzugten Ausführungsform des erfindungsgemäßen Verfahrens,

FIG 2    eine schematische Schnittansicht von oben auf den Prüfgegenstand und den Prüfkopf gemäß der bevorzugten Ausführungsform des erfindungsgemäßen Verfahrens,

FIG 3    eine schematische Skizze über die geometrischen Beziehungen des Prüfgegenstands, des Prüfkopfs und eines Materialsfehlers bei der bevorzugten Ausführungsform des erfindungsgemäßen Verfahrens,

FIG 4    eine schematische Schnittansicht auf den Prüfgegenstand und einen fokussierenden Prüfkopf gemäß dem Stand der Technik, und

FIG 5    eine schematische Schnittansicht auf den Prüfgegenstand und einen Prüfkopf nach dem SAFT-Verfahren gemäß dem Stand der Technik.

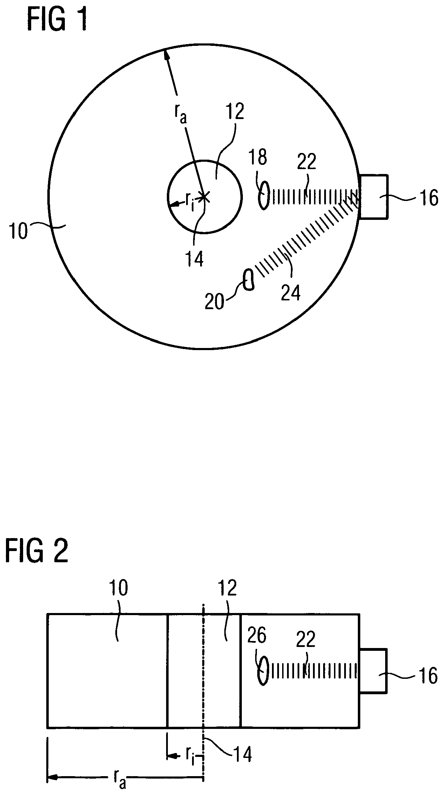

FIG 1 zeigt eine schematische Schnittansicht eines Prüfgegenstands 10. Der Prüfgegenstand 10 ist zylinderförmig ausgebildet. Der Prüfgegenstand 10 weist eine Bohrung 12 auf, die konzentrisch zum Prüfgegenstand 10 ausgerichtet ist. Die Bohrung 12 und der Prüfgegenstand 10 weisen somit eine gemeinsame Rotationssymmetrieachse 14 auf, die in FIG 1 senkrecht zur Zeichnungsebene erstreckt. Der Prüfgegenstand 10 weist einen Außenradius $r_a$ und einen Innenradius $r_i$ auf. Der Innenradius $r_i$ des Prüfgegenstands 10 entspricht somit dem Radius der Bohrung 12. Bei dieser konkreten Ausführungsform handelt es sich bei dem Prüfgegenstand 10 um eine Turbinenscheibe für eine Gas- oder Dampfturbine.

An der Mantelfläche des Prüfgegenstands 10 befindet sich ein Prüfkopf 16. Der Prüfkopf 16 umfasst einen Ultraschallsender und einen Ultraschalldetektor. In dem Prüfgegenstand 10 sind weiterhin ein tangentialer Materialfehler 18 und ein radialer Materialfehler 20 dargestellt. Die Materialfehler 18 und 20 bilden jeweils einen Hohlraum im Prüfgegenstand 10. Der tangentiale Materialfehler 18 erstreckt sich bezüglich des zylindrischen Prüfgegenstands 10 im Wesentlichen in tangentialer Richtung. Entsprechend erstreckt sich der radiale Materialfehler 20 im Wesentlichen in radialer Richtung bezügliche des Prüfgegenstands 10.

Die Materialprüfung erfolgt, indem der Prüfkopf 16 an der äußeren Oberfläche des Prüfgegenstands 10 bewegt wird. FIG 1 verdeutlicht, dass eine radiale Schallwelle 22 an dem tangentialen Materialfehler 18 besonders stark reflektiert wird, da der tangentiale Materialfehler 18 im Wesentlichen parallel zur Oberfläche des Prüfgegenstands 10 ausgerichtet ist. Ebenso wird deutlich, dass eine tangentiale Schallwelle 24 an dem radialen Materialfehler 18 besonders intensiv reflektiert wird.

Umgekehrt wird deutlich, dass die tangentiale Schallwelle 24 nur sehr schwach an dem tangentialen Materialfehler 18 reflektiert werden würde. Auch die radiale Schallwelle 22 würde nur wenig an dem radialen Materialfehler 20 reflektiert werden.

Bei dem erfindungsgemäßen Verfahren erfolgt die Einschallung des Signals aus dem Prüfkopf 16 unter verschiedenen Winkeln. Dabei ist entweder der Prüfkopf 16 selbst oder zumindest dessen Schall emittierende Komponente derart schwenkbar, dass durch das Abtasten der äußeren Umfangsfläche das gesamte Volumen des Prüfgegenstands 10 zugänglich ist. Es werden dadurch insbesondere solche Materialfehler 20 leichter erfasst, deren Ausdehnung parallel zur Oberfläche des Prüfgegenstrands 10 relativ gering sind. Dies wird bei dem zylinderförmigen Prüfgegenstand 10 beispielsweise dadurch erreicht, dass die Einschallrichtung neben der radialen Komponente auch eine tangentiale Komponente aufweist. Auch eine Einschallrichtung mit einer radialen und einer axialen wäre möglich. Schließlich kann sich die Einschallrichtung auch aus einer radialen, tangentialen und axialen Komponente zusammensetzen.

Beim Verfahren gemäß der Erfindung ist es nicht unbedingt notwendig, dass die gesamte Oberfläche oder der gesamte Oberflächenabschnitt abgetastet wird, um das gesamte Volumen des Prüfgegenstands 10 zu erfassen. Es kann beispielsweise eine bestimmte Strecke oder ein bestimmter Weg auf der Oberfläche abgetastet werden, da durch das Schwenken des Prüfkopfs 16 zumindest der relevante Bereich des Volumens auch ohne die vollständige Abtastung der Oberfläche erfasst werden kann.

In FIG 2 ist eine schematische Schnittansicht von oben auf den Prüfgegenstand 10 und den Prüfkopf 16 gemäß der Ausführungsform in FIG 1 dargestellt. FIG 2 zeigt die Bohrung 12, die Rotationssymmetrieachse 14 und die radiale Schallwelle 22. Der axiale Materialfehler 26 weist zumindest in Axialrichtung eine hinreichend große Ausdehnung auf. FIG 2 verdeutlicht, dass die radiale Schallwelle 22 von dem axialen Materialfehler 26 hinreichend stark reflektiert wird. Auch die tangentiale Schallwelle 24 würde von dem axialen Materialfehler 26 bei einem nicht zu großen Einschallwinkel hinreichend stark reflektiert werden.

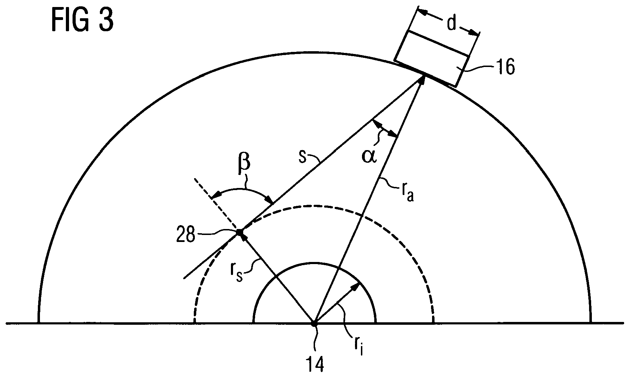

FIG 3 zeigt eine schematische Skizze über die geometrischen Beziehungen des Prüfgegenstands 10, des Prüfkopfs 16 und eines Materialfehlers 28 bei der bevorzugten Ausführungsform des erfindungsgemäßen Verfahrens. Zwischen dem Materialfehler 28 und der Rotationssymmetrieachse 14 ist ein radialer Abstand $r_s$ definiert. Der Schallweg s von dem Prüfkopf 16 bis zu dem Materialfehler 28 ist gegeben durch:

$$s = \sqrt{(r_a^2 - r_i^2)}.$$

Der Winkel zwischen dem Schallweg s und der Flächennormale $r_a$ bildet den Einschallwinkel $\alpha$ bzw. die

Einschallrichtung. Der Schallweg s und der entsprechende Abstandsvektor $r_s$ des Materialfehlers 28 bilden einen rechten Winkel $\beta$.

Durch die Verwendung des fokussierenden Prüfkopfs 16 wird der Schalldruck in der Nähe des Materialfehlers 28 erhöht. Dadurch wird das Signal-Rausch-Verhältnis verbessert. Dies ist jedoch nur innerhalb des Nahfelds sinnvoll. Die Länge n des Nahfelds ist gegeben durch:

$$n = d^2 / (4\lambda).$$

Dabei ist d die Breite des Prüfkopfs 16 und $\lambda$ ist die Wellenlänge der Schallwelle. Bei einer typischen Wellenlänge von $\lambda = 5$ mm und einer gewünschten Länge des Nahfelds von n = 1 m ist ein Prüfkopf 16 mit einer Breite von d = 140 mm erforderlich. Mit dem SAFT-Verfahren lässt sich diese Nahfeldlänge n auch ohne diese Breite erreichen. Bei dem SAFT-Verfahren wird ein breiter Prüfkopf simuliert und somit eine virtuelle Fokussierung erreicht.

Die Amplitude der reflektierten Schallwelle hängt einerseits von der räumlichen Ausdehnung des Materialfehlers 28 und andererseits von den Reflexionseigenschaften an der Grenzfläche des Materialfehlers 28 ab.

Es treten bei der Ultraschallmessung typischerweise zwei Arten von Rauschsignalen auf. Beim ersten Rauschsignal handelt es sich um jenes Rauschen, das bei jedem elektronischen Erfassungssystem, insbesondere in den Verstärkern auftritt. Dies lässt sich durch Mittelung reduzieren. Zwischen dem ersten Rauschsignal und dem reflektierten Schallsignal besteht keine Korrelation, insbesondere keine Phasenkorrelation. Das Aufsummieren der Signale führt daher zu einer Mittelung der Rauschsignale. Mit einer zunehmenden Anzahl von Summanden geht die Summe dieser Rauschsignale gegen Null, wenn die Rauschsignale keinen Gleichspannungsanteil enthalten. In der Praxis tritt entweder kein oder nur ein geringer Gleichspannungsanteil auf.

Das zweite Rauschsignal kommt vom Prüfgegenstand selbst. Die Reflexionen an der Gefügestruktur des Metalls bilden einen Rauschteppich, der mit dem reflektierten Schallsignal korreliert. Bei dem Rauschteppich handelt es sich ebenfalls um ein reflektiertes Schallsignal. Es entsteht aus Reflexionen in polykristallinen Materialien an deren Korngrenzen und in Bereichen unterschiedlicher Orientierung der Kristallachsen. Kristalle sind akustisch anisotrop, so dass sich an den Korngrenzen der Wellenwiderstand ändert. Praktisch betrifft dies alle metallenen Werkstoffe. Die einzelnen Reflexionen aufgrund der Gefügestruktur sind nicht störend, aber in ausgedehnten Bereichen des Prüfgegenstands 10 kommt auf diese Weise das Rauschsignal zustande.

Die Reflexionen am Gefüge und an den Materialfehlern können durch das SAFT-Verfahren getrennt werden. Das Gefügerauschen zeigt eine räumliche Statistik. Die Reflexionen am Gefüge sind phasenkorreliert. Die Summation im SAFT-Algorithmus führt dennoch zu einer relativen Schwächung der Reflexionen am Gefüge, da die Korngrenzen schwächer reflektieren als die Materialfehler. Wenn durch eine zufällig phasenrichtige Überlagerung der Amplituden mehrerer Korngrenzen eine Amplitudensumme zustande kommt, dann ist deren Winkel noch stärker eingeengt. Mit zunehmendem Winkelintervall nehmen die Amplituden aufgrund von Materialfehlern stärker zu als die durch die Korngrenzen bewirkten Amplituden.

Für das erfindungsgemäße Verfahren wird beispielsweise ein Prüfkopf 16 mit einem Durchmesser von d = 24 mm verwendet. Beim SAFT-Algorithmus gemäß der Erfindung wird das Schallfeld des Prüfkopfs 16 berücksichtigt. Im Gegensatz dazu wird beim bekannten SAFT-Algorithmus die Größe des Prüfkopfs 16 vernachlässigt.

Das erfasste Signal entsteht insbesondere durch den reflektierten Anteil eines Ultraschallimpulses an sprunghaften räumlichen Änderungen des Wellenwiderstands im Prüfgegenstand 10. Diese Änderungen werden als Materialfehler interpretiert, wenn dort keine konstruktiv bedingten Materialgrenzen oder Materialübergänge vorhanden sind. Das erfasste Signal enthält nur Informationen über die Amplitude und die Laufzeit. Da die Schallgeschwindigkeit im Material des Prüfgegenstands 10 bekannt ist, lässt sich aus der Laufzeit auch der Abstand bestimmen. Für die Ortsbestimmung in lateraler Richtung kann die räumliche Verteilung des Schallfeldes und der Empfindlichkeit des Prüfkopfs 16 verwendet werden.

Die Signale mit der Amplitude und der Laufzeit, die entlang des Weges vom Prüfkopf 16 erfasst werden, werden bezüglich des Ortes im Prüfgegenstand 10 laufzeitrichtig aufaddiert. Durch diese örtlich korrekte Zuordnung an den richtigen Ort nimmt die Amplitudensumme der Signale, die von einem bestimmten Ort im Prüfgegenstand kommen, mit jedem hinzuaddierten Signal um dessen Amplitude zu. Jedoch hängen die Amplituden von der Position des Prüfkopfs 16 und somit von der relativen Position des Materialfehlers 28 innerhalb des Schallfeldes ab.

Der Mittelwert der Amplitude eines Materialfehlers ohne Richtwirkung ist proportional zu seinem Reflektionsvermögen gewichtet mit einem Faktor k. Der Faktor k ist ein Wert für die mittlere Empfindlichkeit entlang des Weges des Materialfehlers 18 durch das Schallfeld des Prüfkopfes 16. Auf diese Weise kann die erfasste Amplitude sinnvoll bewertet werden.

Bei dem Verfahren gemäß der Erfindung werden nicht einzelne erfasste Amplituden als Funktion der Zeit ausgewertet, sondern die berechneten räumlichen Amplitudenverteilungen. Diese lassen sich durch das SAFT-Verfahren rekonstruieren. Die berechneten räumlichen Amplitudenverteilungen haben ein höheres Signal/Rausch-Verhältnis als die direkt erfassten Amplituden. Auf diese Weise können Materialfehler einfacher identifiziert werden.

Das Verfahren gemäß der Erfindung ermöglicht die Erweiterung der Anwendung der Reflektorbewertung gemäß dem AVG-Verfahren bei kleinen Amplituden durch eine relative Verringerung des Rauschens, wie es auch bei der Verwendung breiter Prüfköpfe 16 möglich wäre. Dabei liegt die Annahme zugrunde, dass die kleine Amplitude auf die geringe Größe des Reflektors zurück zu führen ist. Deshalb hat auch die geringe Richtwirkung des Reflektors, die auf die Beugung zurückzuführen ist, nur einen zu vernachlässigenden Einfluss auf die erfasste Amplitude.

Das erfindungsgemäße Verfahren ermöglicht insbesondere die Untersuchung großer Prüfgegenstände 10 mit entsprechend großen Schallwegen. Diese großen Schallwege bewirken die geringen Amplituden.

Das erfindungsgemäße Verfahren ist auf bekannte klassische Prüftechniken anwendbar, bei denen der Prüfgegenstand mechanisch abgetastet wird und der Ort bzw. die Bewegung des Prüfkopfs 16 zu jedem erfassten Amplituden-Laufzeit-Diagramm bekannt ist.

Die Bewertung der Amplitude erfolgt, indem zunächst der Reflektor von dem Schallfeld abgetastet wird. Die Winkelabhängigkeit der Amplitude innerhalb des Schallfeldes ist bekannt. Es werden m Amplituden in einem definierten Winkelintervall $\Delta\gamma$ um die akustische Achse summiert. Daraus ergibt sich ein eindeutiger Zusammenhang zwischen der Amplitudensumme $H_{Sum}$ und der Größe eines Referenzreflektors, der die gleiche Amplitudensumme $H_{Sum}$ erzeugen würde.

Die Amplitudensumme $H_{Sum}$ ist gegeben durch:

$$H_{Sum} = \sum H_i(\gamma_i),$$

wobei über die Anzahl m der erfassten Amplituden summiert wird. Dabei sind $H_i$ die erfassten Amplituden bei den einzelnen Messungen und $\gamma_i$ der Winkelabstand zur akustischen Achse. Bei einem festen Abstand der Messpunkte sind auch die Winkelabstände bei den einzelnen Messungen in etwa äquidistant. Mit zunehmender Anzahl m der Einzelmessungen nähert sich der Korrekturfaktor k einem Grenzwert, der der mittleren Empfindlichkeit in dem Winkelintervall $\Delta\gamma$ entspricht. Der für das AVG-Verfahren relevante Abstand zwischen dem Materialfehler 18 und dem Prüfkopf 16 ergibt sich aus der Position des Prüfkopfs 16, wenn der bestimmte Ort des Materialfehlers 18 auf der akustischen Achse liegt.

Zwischen der Amplitudensumme $H_{Sum}$ und der Amplitude $H_{AVG}$ gemäß dem AVG-Verfahren besteht die Beziehung:

$$H_{AVG} = H_{Sum} / (m*k),$$

wobei m die Anzahl der Einzelmessungen und k ein Korrekturfaktor ist. Der Korrekturfaktor k ist gegeben durch:

$$k = (1/m) \sum H_0(\gamma_i),$$

wobei über die Anzahl m der erfassten Amplituden summiert wird. Dabei ist $H_0(\gamma_i)$ die winkelabhängige Amplitudenverteilung im Schallfeld des Prüfkopfes 16, die auf $H_0(\gamma=0)=1$ normiert ist.

Mit zunehmender Größe des Materialfehlers, d. h. des Reflektors, nimmt auch dessen Richtwirkung zu. Dies kann bei größeren Materialfehlern und bei einer mittleren Schräglage zu einer Unterbewertung der Amplitude in dem Winkelintervall $\Delta\gamma$ führen und sollte daher berücksichtigt werden. Insbesondere ist das Verfahren für kleinere Materialfehler geeignet, deren Richtwirkung von untergeordneter Bedeutung ist.

In FIG 4 ist eine schematische Schnittansicht auf den Prüfgegenstand 10 und einen fokussierenden Prüfkopf 16 gemäß dem Stand der Technik dargestellt. Der Prüfgegenstand 10 weist einen Materialfehler 30 auf. An der Außenseite des Prüfgegenstands 10 befindet sich der Prüfkopf 16, der als fokussierender Prüfkopf ausgebildet ist. Von dem Prüfkopf 16 werden fokussierte Schallwellen 32, 34 und 36 abgestrahlt.

Dabei stellt die durchgezogene Linie die Wellenfront der aktuellen Schallwelle 32 dar. Die gestrichelten Linien stellen die Wellenfronten der früheren Schallwellen 34 und der späteren Schallwellen 36 dar. Die fokussierten Schallwellen 32, 34 und 36 breiten sich entlang einer vorbestimmten Richtung mit seitlich begrenzter Ausdehnung aus. Die fokussierte Schallwellen 18 und 20 breiten sich somit nicht kugelförmig im gesamten Halbraum aus.

Der Prüfkopf 16 bewegt sich während des Abtastens auf der Oberfläche des Prüfgegenstands 10 entlang einer Abtastrichtung 38. Die Fokussierung tritt jedoch nur innerhalb des Nahfelds des Prüfkopfs 16 auf. Je größer die Breite des Prüfkopfs 16 senkrecht zur Abstrahlrichtung ist, desto größer ist die Länge des Nahfelds und somit die Eindringtiefe der fokussierten Schallwellen 32, 34 und 36.

FIG 5 zeigt eine schematische Schnittansicht auf den Prüfgegenstand 10 und den Prüfkopf 16 nach dem SAFT-Verfahren gemäß dem Stand der Technik. Der Prüfgegenstand 10 ist mit dem Materialfehler 30 dargestellt. An der Außenseite des Prüfgegenstands 10 befindet sich der Prüfkopf 16. Der Prüfkopf 16 hat im Vergleich zu FIG 4 einen relativ kleinen Durchmesser und ist nicht fokussierend ausgebildet.

Von dem Prüfkopf 16 werden kugelschalenförmige Schallwellen 42, 44 und 46 abgestrahlt. Die Wellenfront der aktuellen kugelschalenförmigen Schallwelle 42 ist durch eine durchgezogene Linie dargestellt. Die gestrichelten Linien stellen die Wellenfronten der früheren kugelschalenförmigen Schallwellen 44 sowie der späteren kugelschalenförmigen Schallwellen 46 dar. Ein Vergleich von FIG 4 und FIG 5 verdeutlicht, dass die Wellenfronten 32, 34 und 36 einerseits und 42, 44 und 46 andererseits entgegengesetzt gekrümmt sind.

Der Prüfgegenstand 10 wird bei diesem SAFT-Verfahren von einem Rechner in Volumenelemente unterteilt. Jedes Volumenelement wird während der Abtastung nacheinander als Reflektor betrachtet. Die reflektierten Signalanteile von verschiedenen Positionen des Prüfkopfs 16, die zu demselben Volumenelement gehören, werden aufgezeichnet und mit Unterstützung des Rechners phasenrichtig aufaddiert. Auf diese Weise werden nur für solche Orte mit tatsächlicher Reflexion aufgrund der konstruktiven Interferenz Echosignale mit großer Amplitude erhalten.

Für Orte ohne tatsächliche Reflexion werden aufgrund der destruktiven Interferenz die Echosignale ausgelöscht. Der Abtast- und Rechenvorgang simuliert bei konstruktiver Interferenz einen Ultraschalldetektor, dessen Größe der abgetasteten Fläche entspricht. Bei diesem bekannten SAFT-Verfahren beträgt der Einschallwinkel stets 0° und die gesamte Oberfläche des Prüfgegenstands 10 wird abgetastet.

Gemäß der Erfindung ist im Gegensatz dazu der Einschallwinkel $\alpha$ variierbar.

Das erfindungsgemäße Verfahren ist nicht auf den zylindrischen Prüfgegenstand 10, wie Radscheiben oder Wellen, beschränkt. Die Einschallrichtung kann aus geeigneten Basisvektoren zusammengesetzt werden, die an die geometrische Form des Prüfgegenstands 10 angepasst sind.

Weiterhin kann es bei einer geeigneten Wahl der Schwenkachsen des Prüfkopfs 16 ausreichen, dass nicht eine ganze Oberfläche, sondern nur entlang einer vorbestimmten Strecke oder eines vorbestimmten Weges abgetastet werden muss. Das erfindungsgemäße Verfahren eröffnet somit mehrere Möglichkeiten, um das gesamte Volumen des Prüfgegenstands 10 hinreichend zu erfassen.

Das erfindungsgemäße Verfahren führt zu einer wesentlichen Verbesserung der Erkennbarkeit kleiner Materialfehler und solcher, die sich tief in Inneren des Prüfgegenstands 10 befinden.

**Patentansprüche**

1.    Verfahren zur zerstörungsfreien Materialprüfung eines zumindest abschnittsweise massiven Prüfgegenstands (10) durch Beaufschlagen des Prüfgegenstands (10) mit Ultraschallwellen (20, 24) und Erfassen der innerhalb des Prüfgegenstands (10) reflektierten Ultraschallwellen, wobei das Verfahren die folgenden Schritte aufweist:

    a) rechnergestütztes Unterteilen des Prüfgegenstands (10) in eine vorbestimmte Anzahl von Volumenelementen,

    b) Beaufschlagen des Prüfgegenstands (10) mit Ultraschall an einer Vielzahl von Flächenelementen während eines Abtastens der Oberfläche oder zumindest eines Oberflächenabschnitts des Prüfgegenstands (10),
    c) Erfassen der an den Volumenelementen reflektierten Schallwellen während des Abtastens der Vielzahl von Flächenelementen an der Oberfläche oder zumindest an dem Oberflächenabschnitt des Prüfgegenstands (10), und
    d) phasenrichtiges Aufaddieren der an denselben Volumenelementen reflektierten und an verschiedenen Flächenelementen der Oberfläche des Prüfgegenstands (10) erfassten Schallwellen,

    **dadurch gekennzeichnet, dass**
    eine winkelabhängige Amplitudenverteilung ($H_0$) im Schallfeld des Prüfkopfes (16) verwendet wird und das Beaufschlagen des Prüfgegenstands (10) mit Ultraschall unter verschiedenen Einschallwinkeln ($\alpha$) bezüglich des Flächenelements an der Oberfläche des Prüfgegenstands (10) erfolgt.

2.    Verfahren nach Anspruch 1,
    **dadurch gekennzeichnet, dass**
    aus der winkelabhängigen Amplitudenverteilung ($H_0$) ein Korrekturfaktor (k) bestimmt wird, der der mittleren Empfindlichkeit entlang des Weges durch das Schallfeld des Prüfkopfes (16) entspricht.

3.    Verfahren nach Anspruch 1 oder 2,
    **dadurch gekennzeichnet, dass**
    in Schritt d) die Amplituden der Schallwellen innerhalb eines vorbestimmten Winkelintervalls ($\Delta\gamma$) um die akustische Achse phasenrichtig aufaddiert werden.

4.    Verfahren nach einem der vorhergehenden Ansprüche,
    **dadurch gekennzeichnet, dass**
    die Einschallwinkel ($\alpha$) innerhalb eines Kegels liegen, dessen Symmetrieachse die Normale des jeweiligen Flächenelements bildet.

5.    Verfahren nach einem der vorhergehenden Ansprüche,
    **dadurch gekennzeichnet, dass**
    die Oberfläche oder zumindest der Oberflächenabschnitt des Prüfgegenstands (10) entlang einer vorbestimmten Linie abgetastet wird.

6.    Verfahren nach einem der vorhergehenden Ansprüche,
    **dadurch gekennzeichnet, dass**
    die Oberfläche oder zumindest der Oberflächenabschnitt des Prüfgegenstands (10) nach einem vorbestimmten Schema abgetastet wird.

**7.** Verfahren nach einem der vorhergehenden Ansprüche,
**dadurch gekennzeichnet, dass**
die Oberfläche oder zumindest der Oberflächenabschnitt des Prüfgegenstands (10) vollständig abgetastet wird.

**8.** Verfahren nach einem der vorhergehenden Ansprüche,
**dadurch gekennzeichnet, dass**
die Einschallwinkel ($\alpha$) zwischen 0° und 50°, vorzugsweise zwischen 0° und 30° betragen.

**9.** Verfahren nach einem der vorhergehenden Ansprüche,
**dadurch gekennzeichnet, dass**
das Verfahren für einen zumindest abschnittsweise rotationssymmetrischen Prüfgegenstand (10) vorgesehen ist.

**10.** Verfahren nach einem der vorhergehenden Ansprüche,
**dadurch gekennzeichnet, dass**
das Verfahren für einen zumindest abschnittsweise zylindrischen Prüfgegenstand (10) vorgesehen ist.

**11.** Verfahren nach Anspruch 10,
**dadurch gekennzeichnet, dass**
die Einschallrichtung eine radiale, tangentiale und/oder axiale Komponente bezüglich der Oberfläche des zylindrischen Prüfgegenstands (10) aufweist.

**12.** Verfahren nach einem der vorhergehenden Ansprüche,
**dadurch gekennzeichnet, dass**
das Verfahren für die Materialprüfung eines Prüfgegenstands (10) aus Metall vorgesehen ist.

**13.** Verfahren nach einem der vorhergehenden Ansprüche,
**dadurch gekennzeichnet, dass**
das Verfahren für die Materialprüfung eines geschmiedeten Bauteils (10) vorgesehen ist.

**14.** Verfahren nach einem der vorhergehenden Ansprüche,
**dadurch gekennzeichnet, dass**
das Verfahren für die Materialprüfung eines Turbinenrades vorgesehen ist.

**15.** Vorrichtung zur zerstörungsfreien Materialprüfung eines zumindest abschnittsweise massiven Prüfgegenstands (10), welche wenigstens einen Prüfkopf (16) zum Aussenden von Ultraschallwellen (20, 24) und zum Erfassen der innerhalb des Prüfgegenstands (10) reflektierten Ultraschallwellen aufweist,
**dadurch gekennzeichnet, dass**

- der Prüfkopf (16) schwenkbar ist, so dass die Einschallrichtung bezüglich der Flächennormalen der Oberfläche des Prüfgegenstands (10) variierbar ist und
- ein Rechner vorhanden ist, der eingerichtet ist, die Schritte des Verfahrens nach wenigstens einem der Ansprüche 1 bis 14 durchzuführen.

**16.** Vorrichtung nach Anspruch 18,
**dadurch gekennzeichnet, dass**
der Prüfkopf (16) bezüglich der Flächennormalen der Oberfläche des Prüfgegenstands (10) zwischen 0° und 60°, vorzugsweise zwischen 0° und 30° schwenkbar ist.

**Claims**

**1.** Method for nondestructive material testing of an at least sectionally solid test object (10) by the application of ultrasonic waves (20, 24) to the test object (10) and the detection of the ultrasonic waves reflected inside the test object (10), the method having the following steps:

a) computer-aided subdivision of the test object (10) into a predetermined number of volume elements,
b) application of ultrasound to the test object (10) at a multiplicity of surface elements while scanning the surface or at least one surface section of the test object (10),
c) detection of the sound waves reflected at the volume elements while scanning the multiplicity of surface elements on the surface or at least on the surface section of the test object (10), and
d) in-phase addition of the sound waves reflected at the same volume elements and detected at various surface elements of the surface of the test object (10),

**characterized in that** use is made of an angle-dependent amplitude distribution ($H_0$) in the sound field of the test head (16) and the application of ultrasound to the test object (10) is performed at various insonification angles ($\alpha$) with reference to the surface element on the surface of the test object (10).

**2.** Method according to Claim 1, **characterized in that** the angle-dependent amplitude distribution ($H_0$) is used to determine a correction factor (k) that corresponds to the mean sensitivity along the path through the sound field of the test head (16).

**3.** Method according to Claim 1 or 2, **characterized in that** in step d) the amplitudes of the sound waves are added up in phase within a predetermined angular interval ($\Delta\gamma$) about the acoustic axis.

**4.** Method according to one of the preceding claims, **characterized in that** the insonification angles (α) lie within a cone whose axis of symmetry forms the normal to the respective surface element.

**5.** Method according to one of the preceding claims, **characterized in that** the surface or at least the surface section of the test object (10) is scanned along a predetermined line.

**6.** Method according to one of the preceding claims, **characterized in that** the surface or at least the surface section of the test object (10) is scanned in accordance with a predetermined scheme.

**7.** Method according to one of the preceding claims, **characterized in that** the surface or at least the surface section of the test object (10) is completely scanned.

**8.** Method according to one of the preceding claims, **characterized in that** the insonification angles (α) are between 0° and 50°, preferably between 0° and 30°.

**9.** Method according to one of the preceding claims, **characterized in that** the method is provided for an at least sectionally rotationally symmetrical test object (10).

**10.** Method according to one of the preceding claims, **characterized in that** the method is provided for an at least sectionally cylindrical test object (10).

**11.** Method according to Claim 10, **characterized in that** the insonification direction has a radial, tangential and/or axial component with reference to the surface of the cylindrical test object (10).

**12.** Method according to one of the preceding claims, **characterized in that** the method is provided for the material testing of a test object (10) made from metal.

**13.** Method according to one of the preceding claims, **characterized in that** the method is provided for the material testing of a forged component (10).

**14.** Method according to one of the preceding claims, **characterized in that** the method is provided for the material testing of a turbine wheel.

**15.** Device for nondestructive material testing of an at least sectionally solid test object (10), which has at least one test head (16) for the emission of ultrasonic waves (20, 24) and for the detection of the ultrasonic waves reflected inside the test object (10), **characterized in that**

- the test head (16) is swivel mounted such that the insonification direction can be varied with reference to the surface normal to the surface of the test object (10) and
- a computer is present which is configured to carry out the steps of the method according to at least one of Claims 1 to 14.

**16.** Device according to Claim 15, **characterized in that** the test head (16) is mounted to swivel between 0° and 60°, preferably between 0° and 30°, with reference to the surface normal to the surface of the test object (10).

## Revendications

**1.** Procédé de contrôle non destructif du matériau d'un objet (10) à contrôler plein au moins par endroits, en soumettant l'objet (10) à contrôler à des ondes (20, 24) ultrasonores et en détectant les ondes ultrasonores réfléchies au sein de l'objet (10) à contrôler, le procédé ayant les stades suivants :

a) subdivision assistée par ordinateur de l'objet (10) à contrôler en un nombre défini à l'avance de volumes élémentaires,
b) soumission de l'objet (10) à contrôler à des ultrasons en une pluralité de surfaces élémentaires pendant un balayage de la surface ou au moins d'une partie de la surface de l'objet (10) à contrôler,
c) détection des ondes acoustiques réfléchies sur les volumes élémentaires pendant le balayage de la pluralité de surfaces élémentaires sur la surface ou au moins sur la partie de surface de l'objet (10) à contrôler et
d) addition correcte en phase des ondes acoustiques réfléchies sur les mêmes volumes élémentaires et détectées sur des surfaces élémentaires différentes de la surface de l'objet (10) à contrôler,

**caractérisé en ce que**
on utilise une répartition (H_0) d'amplitude en fonction de l'angle dans le champ acoustique de la tête (16) de contrôle et la soumission de l'objet (10) à contrôler à des ultrasons s'effectue sous des angles (α) d'incidence différents par rapport à la surface élémentaire à la surface de l'objet (10) à contrôler.

**2.** Procédé suivant la revendication 1, **caractérisé en ce que**
on détermine à partir de la répartition (H_0) d'amplitude en fonction de l'angle un facteur (k) de correction, qui correspond à la sensibilité moyenne le long du trajet dans le champ acoustique de la tête (16) de contrôle.

**3.** Procédé suivant la revendication 1 ou 2, **caractérisé en ce que** au stade d) on additionne d'une manière correcte en phase les amplitudes des ondes acoustiques, dans un intervalle ($\Delta\gamma$) angulaire défini à l'avance autour de l'axe acoustique.

**4.** Procédé suivant l'une des revendications précédentes, **caractérisé en ce que** l'angle ($\alpha$) d'incidence se trouve dans un cône, dont l'axe de symétrie forme la normale à la surface élémentaire respective.

**5.** Procédé suivant l'une des revendications précédentes, **caractérisé en ce que** l'on balaie la surface ou au moins la partie de surface de l'objet (10) à contrôler le long d'une ligne définie à l'avance.

**6.** Procédé suivant l'une des revendications précédentes, **caractérisé en ce que** l'on balaie la surface ou au moins une partie de la surface de l'objet (10) à contrôler suivant un schéma défini à l'avance.

**7.** Procédé suivant l'une des revendications précédentes, **caractérisé en ce que** l'on balaie complètement la surface ou au moins la partie de surface de l'objet (10) à contrôler.

**8.** Procédé suivant l'une des revendications précédentes, **caractérisé en ce que** l'angle ($\alpha$) d'incidence est compris entre 0° et 50°, de préférence entre 0° et 30°.

**9.** Procédé suivant l'une des revendications précédentes, **caractérisé en ce que** le procédé est prévu pour au moins un objet (10) à contrôler de révolution au moins par endroit.

**10.** Procédé suivant l'une des revendications précédentes, **caractérisé en ce que** le procédé est prévu pour un objet (10) à contrôler cylindrique au moins par endroit.

**11.** Procédé suivant la revendication 10, **caractérisé en ce que** a direction d'incidence à une composante radiale, tangentielle et/ou axiale par rapport à la surface de l'objet (10) à contrôler cylindrique.

**12.** Procédé suivant l'une des revendications précédentes, **caractérisé en ce que** le procédé est prévu pour le contrôle du matériau d'un objet (10) à contrôler en métal.

**13.** Procédé suivant l'une des revendications précédentes, **caractérisé en ce que** le procédé est prévu pour le contrôle du matériau d'une pièce (10) forgée.

**14.** Procédé suivant l'une des revendications précédentes, **caractérisé en ce que** le procédé est prévu pour le contrôle du matériau d'une roue de turbine.

**15.** Dispositif de contrôle non destructif du matériau d'un objet (10) à contrôler plein au moins par endroit, qui a au moins une tête (16) de contrôle pour l'émission d'ondes (20, 24) ultrasonores et pour la détection des ondes ultrasonores réfléchies au sein de l'objet (10) à contrôler, **caractérisé en ce que**

- la tête (16) de contrôle est pivotante, de manière à pouvoir faire varier la direction d'incidence par rapport aux normales à la surface de l'objet (10) à contrôler et
- il y a un ordinateur conçu pour effectuer des stades du procédé selon au moins l'une des revendications 1 à 14.

**16.** Dispositif selon la revendication 18, **caractérisé en ce que** la tête (16) de contrôle est pivotante par rapport à la normale à la surface de l'objet (10) à contrôler entre 0° et 60°, de préférence entre 0° et 30°.

**FIG 1**

**FIG 2**

FIG 3

## FIG 4

16
38
36
36
32
34
34
30
10

## FIG 5

16
38
46
46
42
44
30
44
10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARTIN SPIES ; WINFRIED JAGER.** Synthetic aperture focusing for defect reconstruction in anisotropic media. *Ultrasonics,* 2003, vol. 41, 125-131

- **BAZULIN E.G.** Utilization of Double Scanning in Ultrasonic Testing to Improve the Quality of the Scatterer Images. *Acoustical Physics,* 2001, vol. 47 (6), 649-653